Europäisches Patentamt

European Patent Office

Office européen des brevets

(19)

(11) Publication number: **0 267 031 B1**

(12) **EUROPEAN PATENT SPECIFICATION**

(45) Date of publication of patent specification: **28.09.94**

(51) Int. Cl.⁵: **C01B 17/50**, C01F 11/08, C01B 17/06, C22B 1/02

(21) Application number: **87309782.8**

(22) Date of filing: **05.11.87**

(54) Desulfurization of gypsum.

(30) Priority: **06.11.86 US 927439**

(43) Date of publication of application:
**11.05.88 Bulletin 88/19**

(45) Publication of the grant of the patent:
**28.09.94 Bulletin 94/39**

(84) Designated Contracting States:
**BE DE ES FR GB GR IT NL SE**

(56) References cited:
**EP-A- 0 004 568
AT-B- 218 035
GB-A- 1 564 663
US-A- 4 503 018**

(73) Proprietor: **FLORIDA INSTITUTE OF PHOS-PHATE RESEARCH
1185 West Main Street
Bartow Florida 33830 (US)**

(72) Inventor: **Marten, Jerome Herbert
2605 Hollingsworth Hill,
Lakeland, Florida 33803 (US)**
Inventor: **Lloyd, George Michael Jr.,
1423 Briarwood Lane,
Lakeland, Florida 33803 (US)**

(74) Representative: **Eyles, Christopher Thomas et al
W.P. THOMPSON & CO.
Celcon House
289-293 High Holborn
London WC1V 7HU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

BACKGROUND OF THE INVENTION

The present invention relates to a process for the desulfurization of gypsum such as natural or by-product phosphogypsum. The present process provides for the coproduction of a solid sintered material and a gaseous effluent containing sulfur dioxide, sulfur or mixtures thereof.

Natural phosphate rock is the primary commercial source of phosphorous. One of the most common methods of producing phosphoric acid from the phosphate rock is the acid or wet process. The wet process comprises digesting the phosphate rock with a strong mineral acid, e.g., sulfuric acid, to release phosphoric acid. The solid residue of the wet process is impure calcium sulfate or phosphogypsum. Phosphogypsum has, until recently, been considered a waste product of the wet process having no commercial value and thus great mounds of phosphogypsum have accumulated near and around phosphoric acid plants. These mounds of phosphogypsum pose an environmental problem due to the acidulation of rainwater runoff from the soluble compounds in the phosphogypsum.

One commercially valuable process which converts phosphogypsum into useful products is disclosed in U.S. Patent 4,503,018 issued to Gardner et al. (Gardner) which is incorporated by reference in its entirety. The Gardner process produces sulfur and/or sulfur dioxide from gypsum by thermal decomposition of the gypsum. More specifically, Gardner pelletizes a mixture of fine coal and fine gypsum material and charges the pellets to a travelling grate where the pellets are heated under suitable conditions to produce a gaseous effluent containing sulfur dioxide and/or sulfur. After the pellets have undergone the thermal decomposition, the lime residue may be sold or used in conventional applications. Gardner teaches that other carbonaceous material or reducing materials such as coke, petroleum coke, elemental sulfur, pyrite and other sulfides may be used in place or coal.

While the Gardener process is a viable method of converting phosphogypsum into usable products, those skilled in the art are continuously striving to find methods of improving the efficiency of the Gardner process and provide a more economical means of utilizing the phosphogypsum. Surprisingly, the present inventors have discovered that use of the combination of carbonaceous material and pyrite as a feed mix provides significant and unexpected advantages over use of coal or pyrite alone.

Summary of the Invention

The present invention relates to an improvement to the Gardner process by supplementing the pelletized mixture with a pyritic material or its equivalent in terms of Fe or S content. By using a pyritic material and carbonaceous material in the pelletized mixture, a sintered product is produced having improved chemical and physical properties, the sulfur content of the gaseous effluent is increased, the overall sulfur removal efficiency of the process is increased and the consumption of expensive carbonaceous fuel is reduced. According to the present invention there is provided a process for desulfurization of gypsum comprising the steps of:

(a) forming a mixture comprising carbonaceous material and gypsum,

(b) balling the mixture to form pellets,

(c) charging the pellets to a travelling grate,

(d) moving the travelling grate to carry the charge of pellets successively through a firing zone and a post firing zone,

(e) heating the charge on the grate in the firing zone to produce a solid sintered material and a gaseous effluent containing sulfur dioxide, sulfur or mixtures thereof, and

(f) passing a portion of the gaseous effluent from the firing zone through the charge in the post firing zone, characterised in that it further comprises adding a pyritic material or its equivalent amount of Fe and S to the mixture of carbonaceous material and gypsum, that the amount of the pyritic material is at least 5 percent by weight of the mixture and that the amount of the carbonaceous material is at least 4 percent by weight of the mixture.

Brief Description of the Drawings

FIG. 1 is a diagrammatic section view of a travelling grate suitable for use in the present invention.

FIG. 2 is a diagrammatic plan view of a circular travelling grate suitable for use in the present invention.

FIG. 3 is a graph showing the $SO_2$ concentration versus sintering time for Examples 1 and 2.

Detailed Description of the Preferred Embodiments

The present invention utilizes the proven travelling grate reactor to thermally decompose phosphogypsum into usable by-products. The process incorporates pyritic materials with a mixture of phosphogypsum, solid carbonaceous material, and optionally a number of other additives. The mixture is balled into pellet form suitable for processing on a travelling grate. The pellets are charged onto the travelling grate which carries the pellets through a series of zones including firing and post firing zones. In the firing zone, the pellets are heated under suitable reaction conditions such that a gaseous effluent is produced containing sulfur dioxide, sulfur or mixtures thereof. The gaseous effluent or portions thereof is preferably passed through the charge as the charge passes through the post firing zone and is thereafter collected for use as the feed gas for a conventional metallurgical-type sulfuric acid plant. The sintered, solid by-product, which remains on the grate after the reaction, is discharged in a dry form from the grate.

By the supplemental addition of pyritic materials to the mixture of phosphogypsum and carbonaceous materials, significant improvements are achieved over the Gardner process. Firstly, the solid sintered co-product has improved physical and chemical characteristics over lime and has use in a number of applications including skid-resistent road surfaces, road bases, soil cement and consolidation of phosphatic clays. Secondly, use of the pyritic material improves the sulfur content of the gaseous effluent, i.e., sulfur dioxide gas strength, from the travelling grate reactor. Thirdly, the sulfur removal efficiency of the overall travelling grate process is increased as there is a catalytic effect due to the addition of the pyritic materials. Fourthly, the consumption of expensive carbonaceous fuel is reduced by permitting cheaper forms of high sulfur fuel to be used which, in turn, further enhance and improve the amount of sulfur removal by the process of the present invention. Lastly, the present process addresses the ecological need for a clean and efficient use of pyritic materials which will decrease the acid-drainage problems of Appalachian coal operations by consumption of waste pyrites and carbon-containing wastes.

Mined coal, also known as mineral coal, pit coal, hard coal and Steinkohle, generally contain sulfur and mineral detrites. A portion of this sulfur is usually present in the form of pyrite (iron disulfide). Pyrite has long posed a problem for those in the coal industry since removal of pyrite from coal is extremely difficult depending on the amount present. In many cases, combustion of high-sulfur coal is not permitted, while in other cases such combustion is permitted but expensive energy-consuming methods must be used to remove the sulfur-containing components from the exhaust gas stream before it is vented to the atmosphere. With some mineral coals, the problem is more pronounced than others. For example, in Ruhr Valley coal, some 40 to 60% by weight of the sulfur content of the mineral coal can be in the form of pyritic sulfur and pyrites themselves contain 50% and more sulfur by weight. The pyrite material that is used in the present process can therefore be intermixed with the coal or be added separately from another source of supply. In addition, chemical equivalents of pyrite may be used. It is therefore contemplated that iron and sulfur may be used as an equivalent to pyrite ($FeS_2$) when used in amounts approximately equal to the molar ratio of Fe and S in pyrite and achieve many of the benefits of the present invention.

Depending on the mix "recipe", the chemical and physical properties of the sintered solid material product by the present process will vary allowing a broad spectrum of use. While the amount of pyrite or its equivalent may vary, it is generally present in the mixture in amounts on a dry weight basis ranging from about 5 to about 20 percent by weight of the overall weight of the mixture. Preferably, the mixture contains from about 5 to about 15 percent by weight of the pyritic material or its equivalent.

Both natural and by-product gypsums, such as those which originate from the production of phosphoric acid and which are commonly known as phosphogypsum, can be used. The particle size of the gypsum may range from about 20 mesh to 500 mesh (about 850 $\mu$m to 25 $\mu$m) and contain from 60 to 95% $CaSO_4$ in the form of crystals. While the amount of gypsum in the mixture can vary, the gypsum is generally present in amounts from about 50 to about 80 percent by weight of the overall mixture on a dry weight basis. Preferably, the gypsum is present in amounts ranging from about 55 to about 75 percent by weight of the mixture.

Since the pellets will be charged to a travelling grate for heating, it is preferred that the carbonaceous material be solid. Examples of carbonaceous materials that can be used include coke, petroleum coke and coal. Preferably, the coal has a high sulfur content which further contributes to the efficiency of the present process due to its lower cost and contribution to the overall production and removal of sulfur. While the weight percentage of the carbonaceous material, as carbon, to the overall weight of the total mixture may vary, the carbonaceous material as carbon is generally present in amounts ranging from about 4 to about 11 percent by weight of the total mixture on a dry basis. Preferably, the weight percent of the carbonaceous material as carbon is from about 4 to about 9 percent.

In addition to the carbonaceous material, gypsum and pyritic material, optional additives may be incorporated into the mixture. Examples of such additives include clay (phosphatic clays), recycled sintered material (also known as returns), and binding agents such as lime. The preferred additive is clay. The non-return additives may be present in amounts from 0 to 5 percent by weight of the mixture on a dry weight basis with amounts of from 1 to about 2 percent by weight being preferred. The recycled sintered material or return additives may be present in greater amounts ranging from about 5 to 25 percent by weight of the mixture on a dry weight basis with amounts of from 10 to about 20 percent by weight being preferred.

In accordance with the present invention, the present process utilizes a balling mechanism for forming a mixture of gypsum, carbonaceous material and pyritic material into pellets.

For proper balling, it is preferable that a portion of the mixture fed to the balling mechanism be relatively fine. The balling mechanism can be an open circuit balling pan or drum arrangement or a closed circuit balling pan or drum arrangement with sizing devices such as vibrating screens or roller separators. The balling mechanism is designed to produce balls or green pellets about 1 inch (25.4 mm) or less in diameter. One example of a suitable pelletized pan apparatus is illustrated in U.S. Patent No. 3,169,269. Water and/or other ingredients may be added to the mixture being balled to aid in the forming of green pellets.

The travelling grate mechanism includes sealed hoods and burners for heating the pellets under controlled reaction conditions to evolve sulfur and/or sulfur dioxide. One example of a preferred travelling grate mechanism is a liquid sealed circular grate (Carousel type) similar to the circular travelling grates commercially available from Davy McKee Corporation, Lakeland, Florida 33807, U.S.A. having sufficient size in order to economically handle large quantities of pellets. Travelling grates useful in producing the present invention are also disclosed in U.S. Patent Nos. 3,302,936; 3,325,395; 4,111,755; 4,200,517; and 4,220,454 which are incorporated by reference in their entirety.

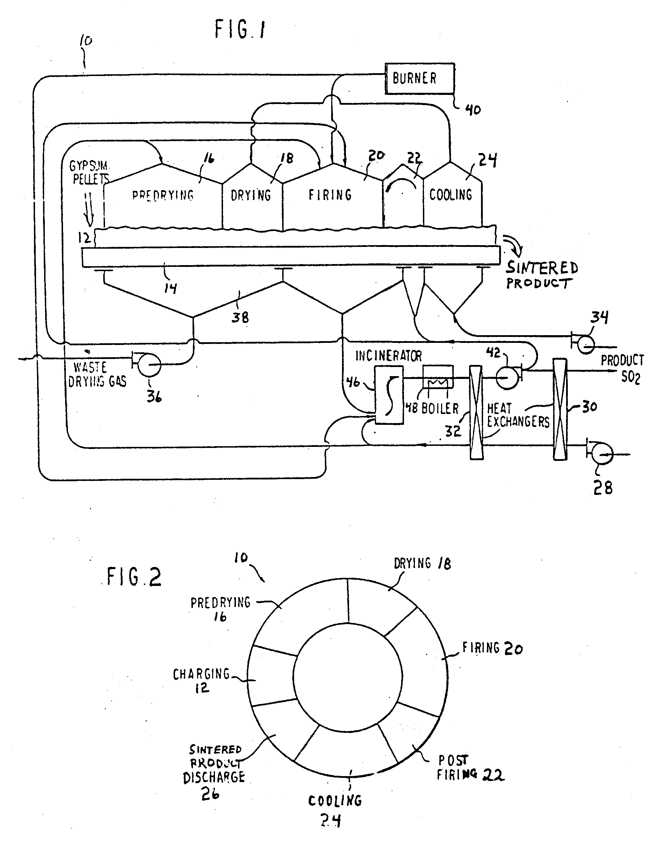

An example of a suitable circular travelling grate mechanism 10 is illustrated in FIGS. 1 and 2. The mechanism 10 includes facilities 12 for depositing a charge of green pellets upon a moving grate 14 which successively moves the charge through various zones, such as predrying zone 16, drying zone 18, firing zone 20, postfiring zone 22 and cooling zone 24, within a sealed hood to a facility 26 for discharging solids from the travelling grate. In the predrying zone 16 air from blower 28 which is heated in heat exchangers 30 and 32 by the product gas, is employed to remove at least a portion of the moisture from the green pellets. Blower 34 drives air through the hot charge on the grate 14 in the cooling zone 24 and thence to the drying zone 18 where the air completes the drying of the green pellets. The moist waste drying air is removed by blower 36 from a wind box 38 extending in the predrying and drying zones. A burner 40, supplies heated gas to the firing zone 20 sufficient to heat the surface of the charge to a temperature within the range of 1800° to 2200°F. (980° to 1200°C.) Quantities of fresh air from the blower 28 and recycled product gas from blower 42 are also supplied to the firing zone 20. The product gas is removed from the firing zone 20 and is then passed through an incinerator 46 where combustible gas products are burned with fresh air from blower 28 and hot low BTU gas from burner 40. In post-firing zone 22, a portion of the product gas from blower 42 is recycled to pass upward through the charge and then downward into the product to remove the greatest portion of product gas from the charge. The output product gas from the incinerator 46 is passed through a water heat boiler 48 and the heat exchangers 32 and 30 where heat from the process is recovered. The effluent gas removed through heat exchanger 30 is passed to any conventional sulfuric acid plant. An example of a suitable plant is available from Davy McKee, Lakeland, Florida 33807, U.S.A., which employs the Davy Double Absorption Catalytic process to convert sulfur dioxide to sulfuric acid.

A sintering pot system was utilized to simulate industrial conditions employing a travelling grate. The tests were used to compare the results of a thermal decomposition of a feed mix without pyrites (Example 1) and a feed mix incorporating pyrites (Example 2). Table 1 provides a summary of conditions and results for Example 1. Table 2 is a summary of the conditions and results for Example 2.

## Table 1

CONDITIONS AND RESULTS FROM EXAMPLE 1 SINTERING TEST

| FEED DATA | Wt% (Dry Basis) |
|---|---|
| Phosphogypsum (w/hydration water) | 69 |
| Petroleum Coke | 10 |
| Clay (Phosphatic Slimes) | 1 |
| Returns | 20 |
| Total | 100 |

| CHARGE DATA | |
|---|---|
| Moisture - Air Dried % | 10.5 |
| Moisture - Oven Dried % | 17.7 |
| Returns - lb (kg) | 12.1 (5.49) |
| Total Weight - lb (Fresh Feed & Returns) (kg) | 69 (31.30) |
| Size | 3/8" x 1/8" (9.52 mm x 3.18 mm) |
| + 6M % (>3.35 mm - %) | 94 |
| Bed Depth - in. (mm) | 12 (304.8) |
| Total Sulfur % (dry) | 12.4 |

| PROCESSING CONDITIONS | |
|---|---|
| Drying Duration - min | 0 |
| Ignition Duration - min | 1.25 |
| Sintering: | |
| Average Bed Pressure - in. $H_2O$ (bar) | 7.5 (1.018) |
| Peak Bed Temp. - °F (°C) | 2800 + (1538+) |
| Wind Box Temp. - °F (°C) | 400 max. (204 max.) |
| Sintering Duration - min. | 12 |
| Cooling Duration ($SO_2$ <1%) | 1.75 |
| Total Duration - min. | 14.5 |

| PRODUCT DATA-GAS | |
|---|---|
| Max. $SO_2$ content - vol. % | 7.6 |
| Time $SO_2$ over 5 vol. % (Dry) - min. | 9 |
| Levelized $SO_2$ ($SO_2/O_2$ = 1)-Vol. % (Dry) | 6.1 |

## Table 1 continued

PRODUCT DATA-SOLIDS

| | |
|---|---|
| Discharge Weight - lb (kg) | 38.4 (17.42) |
| Hearth Layer Free Weight - lb (kg) | 34.4 (15.60) |
| Sulfur - Fresh Feed - lb (kg) | 6.14 (2.79) |
| Sulfur - Net Product - lb (kg) | 1.02 (0.46) |
| Sulfur Removal - % | 83.4 |
| Los Angeles Abrasion Test- | |
| weight percent greater than | 43% |

Table 2

CONDITIONS AND RESULTS FROM EXAMPLE 2

| FEED DATA | Wt% (Dry Basis) |
|---|---|
| Phosphogypsum (w/hydration water) | 56 |
| Petroleum Coke | 5 |
| Pyrites | 18 |
| Clay (Phosphatic Slimes) | 1 |
| Returns | 20 |
| Total | 100 |

| CHARGE DATA | |
|---|---|
| Moisture – Air Dried % | 10.7 |
| Moisture – Oven Dried % | 17.9 |
| Returns – lb (kg) | 19.0 (8.62) |
| Total Weight – lb (Fresh Feed & Returns) (kg) | 86 (39.01) |
| Size | 3/8" x 1/8" (9.52 mm x 3.18 mm) |
| + 6M % (>3.35 mm – %) | 92 |
| Bed Depth – in. (mm) | 12 (30.48) |
| Total Sulfur % (Dry) | 16.2 |

| PROCESSING CONDITIONS | |
|---|---|
| Drying Duration – min. | 0 |
| Ignition Duration – min. | .75 |
| Sintering: | |
| Average Bed Pressure – in. $H_2O$ (bar) | 9.0 (1.022) |
| Peak Bed Temp. – °F (°C) | 2600 + (1427 +) |
| Wind Box Temp. – °F (°C) | 500 max. (260 max) |
| Sintering Duration – min. | 17.75 |
| Cooling Duration ($SO_2$ <1%) | 1.5 |
| Total Duration – min. | 20.0 |

7

## Table 2 continued

PRODUCT DATA-GAS

| | |
|---|---|
| Max. SO$_2$ Content - Vol. % | 16.2 |
| Time SO$_2$ over 5 vol. (Dry) - min. | 15 |
| Levelized SO$_2$ (SO$_2$/O$_2$ = 1)-Vol. % (Dry) | 9.0 |

PRODUCT DATA-SOLIDS

| | |
|---|---|
| Discharge weight - lb (kg) | 50.25 |
| | (22.79) |
| Hearth Layer Free Weight - lb (kg) | 44.25 |
| | (20.07) |
| Sulfur - Fresh Feed - lb (kg) | 9.95 |
| | (4.51) |
| Sulfur - Net Product - lb (kg) | .78 |
| | (0.35) |
| Sulfur Removal - % | 92.2 |
| Los Angeles Abrasion Test - | |
| weight percent greater than | 68% |

Amongst the significant improvements in the data of Table 2 over that of Table 1 is a substantial increase of 58% in the Los Angeles Abrasion Test of the sintered material of the present invention over the lime product of Table 1.

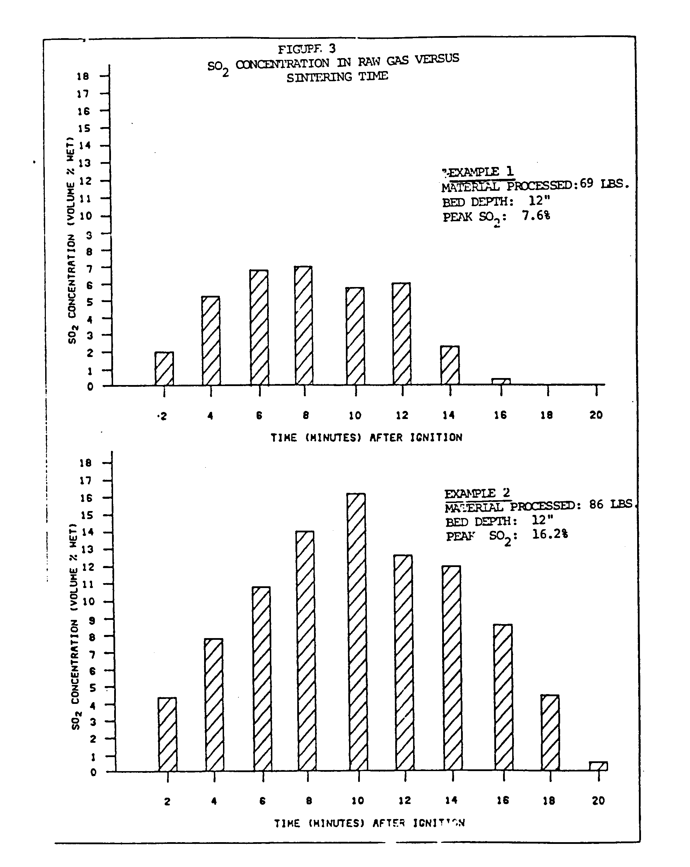

Since one of the critical parameters for the successful production of sulfuric acid is the SO$_2$ strength in the fuel gas, the SO$_2$ concentration was continually measured in Examples 1 and 2. The SO$_2$ concentration was measured using a Teledyne Model 690 SO$_2$ analyzer. Plots of SO$_2$ concentration versus time for Examples 1 and 2 are given in FIG. 3.

As can be seen in FIG. 3, the addition of pyrites results in a dramatic increase in the SO$_2$ strength. The longer sintering time is more than offset by the increased density of the material processed and lower amounts of raw materials fed per ton of H$_2$SO$_4$.

While the present invention has been described with reference to particular embodiments thereof, it will be understood that numerous modifications may be made by those skilled in the art without actually departing from the spirit and scope of the invention as defined in the appended claims.

**Claims**

1. A process for desulfurization of gypsum comprising the steps of:
   (a) forming a mixture comprising carbonaceous material and gypsum,
   (b) balling the mixture to form pellets,
   (c) charging the pellets to a travelling grate,
   (d) moving the travelling grate to carry the charge of pellets successively through a firing zone and a post firing zone,
   (e) heating the charge on the grate in the firing zone to produce a solid sintered material and a gaseous effluent containing sulfur dioxide, sulfur or mixtures thereof, and
   (f) passing a portion of the gaseous effluent from the firing zone through the charge in the post firing zone,
   characterised in that it further comprises adding a pyritic material or its equivalent amount of Fe and S to the mixture, that the amount of the pyritic material is at least 5 percent by weight of the mixture, and that the amount of the carbonaceous material is at least 4 percent by weight of the mixture.

8

2. The process of claim 1 <u>characterised in that</u> the mixture comprises, on a dry weight basis
   (a) from about 50 to about 80 percent by weight of gypsum;
   (b) from about 4 to about 11 percent by weight of carbonaceous material as carbon; and
   (c) from about 5 to about 20 percent by weight of pyritic material or its equivalent.

3. The process of claim 1 or claim 2 <u>characterised in that</u> the carbonaceous material is coke, petroleum coal or coal.

4. The process of claim 3 <u>characterised in that</u> the carbonaceous material is petroleum coke.

5. The process of claim 3 <u>characterised in that</u> the carbonaceous material is coal containing a substantial portion of sulfur.

6. The process of any one of claims 1 to 5 <u>characterised in that</u> the mixture additionally contains clay, lime, recycled solid sintered material or mixture thereof.

7. The process of any one of claims 1 to 6 <u>characterised in that</u> the portion of gaseous effluent that passes through the charge in the post firing zone is combined with the gaseous effluent from the firing zone, and <u>that</u> the portion of the gaseous effluent that passes through the charge in the post firing zone is taken from the combined effluent.

8. The process of any one of claims 1 to 7 <u>characterised in that</u> the mixture comprises on a dry weight basis,
   (a) from about 55 to about 75 percent by weight of gypsum;
   (b) from about 4 to about 9 percent by weight of carbonaceous material as carbon;
   (c) from about 5 to about 15 percent by weight of pyritic material or its equivalent in terms of Fe and S;
   (d) from about 0 to about 5 percent by weight of clay, lime or mixture thereof; and
   (e) from about 5 to about 25 percent by weight of recycled solid sintered material.

9. The process of claim 8 <u>characterised in that</u> the clay, lime or mixture thereof is present in amounts of from about 1 to 2 percent by weight.

10. The process of claim 8 or claim 9 <u>characterised in that</u> the recycled solid sintered material is present in amounts of from about 10 to 20 percent by weight.

11. The process of any one of claims 1 to 10 <u>characterised in that</u> the mixture of carbonaceous material, gypsum and pyritic material or its equivalent in terms of Fe and S are balled to form pellets prior to being charged to said travelling grate.

12. The process of any one of claims 1 to 11 <u>characterised in that</u> said solid sintered material is discharged from the grate and is recycled by addition to said mixture of carbonaceous material and gypsum.

**Patentansprüche**

1. Verfahren zur Entschwefelung von Gips mit den Stufen der
   (a) Bildung eines kohlenstoffhaltiges Material und Gips enthaltenden Gemisches,
   (b) Zusammenballung des Gemisches unter Bildung von Pellets,
   (c) Beschickung eines Wanderrostes mit den Pellets,
   (d) Bewegung des Wanderrostes, um die Pelletbeschickung nacheinander durch eine Brennzone und eine Nachbrennzone zu tragen,
   (e) Erhitzung der Beschickung auf dem Rost in der Brennzone zur Erzeugung eines festen Sintermaterials und eines gasförmiges Schwefeldioxid, Schwefel oder ihre Gemische enthaltenden Abstroms und
   (f) Führung eines Teils des gasförmigen Abstroms aus der Brennzone durch die Beschickung in die Nachbrennzone,
   dadurch gekennzeichnet, daß es ferner die Zugabe eines pyritischen Materials oder seiner äquivalenten Menge Fe und S zu dem Gemisch umfaßt, die Menge des pyritischen Materials

EP 0 267 031 B1

wenigstens 5 Gewichtsprozent des Gemisches beträgt und die Menge des kohlenstoffhaltigen Materials wenigstens 4 Gewichtsprozent des Gemisches beträgt.

2. Verfahren nach Anspruch 1, dadurch gekennzeichnet, daß das Gemisch auf Trockgewichtsbasis
   (a) etwa 50 bis etwa 80 Gewichtsprozent Gips,
   (b) etwa 4 bis etwa 11 Gewichtsprozent kohlenstoffhaltiges Material als Kohlenstoff, und
   (c) etwa 5 bis etwa 20 Gewichtsprozent pyritisches Material oder sein Äquivalent enthält.

3. Verfahrennach Anspruch 1 oder Anspruch 2, dadurch gekennzeichnet, daß das kohlenstoffhaltige Material Koks, Ölkohle oder Kohle ist.

4. Verfahren nach Anspruch 3, dadurch gekennzeichnet, daß das kohlenstoffhaltige Material Ölkoks ist.

5. Verfahren nach Anspruch 3, dadurch gekennzeichnet, daß das kohlenstoffhaltige Material Kohle mit einem wesentlichen Anteil Schwefel ist.

6. Verfahren nach einem der Ansprüche 1 bis 5, dadurch gekennzeichnet, daß das Gemisch zusätzlich Ton, Kalk, zurückgeführtes festes Sintermaterial oder ein Gemisch aus diesen Stoffen enthält.

7. Verfahren nach einem der Ansprüche 1 bis 6, dadurch gekennzeichnet, daß der durch die Beschickung in der Nachbrennzone strömende Anteil des gasförmigen Abstroms mit dem gasförmigen Abstrom aus der Brennzone vereinigt wird und der durch die Beschickung in der Nachbrennzone strömende, gasförmige Abstrom aus dem vereinigten Abstrom entnommen wird.

8. Verfahren nach einem der Ansprüche 1 bis 7, dadurch gekennzeichnet, daß das Gemisch auf Trockengewichtsbasis
   (a) etwa 55 bis eta 75 Gewichtsprozent Gips,
   (b) etwa 4 bis etwa 9 Gewichtsprozent kohlenstoffhaltiges Material als Kohlenstoff,
   (c) etwa 5 bis etwa 15 Gewichtsprozent pyritisches Material oder sein Äquivalent in Form von Fe und S,
   (d) etwa 0 bis etwa 5 Gewichtsprozent Ton, Kalk oder deren Gemisch, und
   (e) etwa 5 bis etwa 25 Gewichtsprozent zurückgeführtes festes Sintermaterial enthält.

9. Verfahren nach Anspruch 8, dadurch gekennzeichnet, daß der Ton, Kalk oder deren Gemisch in Mengen von etwa 1 bis 2 Gewichtsprozent vorliegt.

10. Verfahren nach Anspruch 8 oder Anspruch 9, dadurch gekennzeichnet, daß das zurückgeführte feste Sintermaterial in Mengen von etwa 10 bis 20 Gewichtsprozent vorliegt.

11. Verfahren nach einem der Ansprüche 1 bis 10, dadurch gekennzeichnet, daß das Gemisch aus kohlenstoffhaltigem Material, Gips und pyritischem Material oder seinem Äquivalent in Form von Fe und S unter Bildung von Pellets zusammengeballt wird, bevor der Wanderrost mit ihm beschickt wird.

12. Verfahren nach einem der Ansprüche 1 bis 11, dadurch gekennzeichnet, daß das feste Sintermaterial von dem Rost abgeworfen und durch Zugabe zu dem genannten Gemisch aus kohlenstoffhaltigem Material und Gips zurückgeführt wird.

## Revendications

1. Procédé de désulfuration du gypse comprenant les étapes suivantes :
   (a) former un mélange comprenant un matériau carboné et du gypse
   (b) agglomérer le mélange pour former des pellets
   (c) charger les pellets sur une grille mécanique
   (d) déplacer la grille mécanique pour faire passer la charge de pellets sucessivement à travers une zone de cuisson et une zone de post-cuisson
   (e) chauffer la charge sur la grille dans la zone de cuisson pour obtenir un matériau solide fritté et un effluent gazeux contenant du dioxyde de soufre, du soufre ou leurs mélanges et

10

(f) passer une partie de l'effluent gazeux de la zone de cuisson à travers la charge dans la zone de postcuisson,

caractérisé en ce qu'il comprend en outre l'addition de matériau pyritique ou de sa quantité équivalente de Fe et de S dans le mélange, en ce que la quantité de matériau pyritique est au moins de 5 % en poids du mélange, et en ce que la quantité de matériau carboné est au moins de 4 % en poids du mélange.

2. Procédé selon la revendication 1 caractérisé en ce que le mélange comprend sur la base d'un poids sec

(a) de 50 à 80 % environ en poids de gypse

(b) de 4 à 11 % environ en poids de matériau carboné comme le carbone; et

(c) de 5 a 20 % environ en poids de matériau pyritique ou son équivalent.

3. Procédé selon la revendication 1 ou 2 caractérisé en ce que le matériau carboné est du coke, du charbon de pétrole ou du charbon.

4. Procédé selon la revendication 3 caractérisé en ce que le matériau carboné est du coke de pétrole.

5. Procédé selon la revendication 3 caractérisé en ce que le matériau carboné est du charbon contenant une partie substantielle de soufre.

6. Procédé selon l'une quelconque des revendications 1 à 5 caractérisé en ce que le mélange contient en outre de l'argile, de la chaux, un matériau fritté solide recyclé ou leur mélange.

7. Procédé selon l'une quelconque des revendications 1 à 6 caractérisé en ces que la partie d'effluent gazeux qui passe à travers la charge dans la zone de postcuisson est combinée avec l'effluent gazeux de la zone de cuisson, et en ce que la partie de l'effluent gazeux qui passe à travers la charge dans la zone de post-cuisson est prélevée à partir de l'effluent combiné.

8. Procédé selon l'une quelconque des revendications 1 à 7 caractérisé en ce que le mélange comprend, sur la base d'un poids sec :

(a) environ 55 à environ 75 % en poids de gypse;

(b) environ 4 à environ 9 % en poids de matériau carboné comme le carbone;

(c) environ 5 à environ 15 % en poids de matériau pyritique ou son équivalent en termes de Fe et S;

(d) environ 0 à environ 5 % en poids d'argile, de chaux ou leur mélange; et

(e) environ 5 à environ 25 % en poids de matériau fritté solide recyclé.

9. Procédé selon la revendication 8 caractérisé en ce que l'argile, la chaux ou leurs mélanges sont présents en quantités d'environ 1 à 2 % en poids.

10. Procédé selon la revendication 8 ou 9 caractérisé en ce que le matériau fritté solide recyclé est présent en quantités d'environ 10 à 20 % en poids.

11. Procédé selon l'une quelconque des revendications 1 à 10 caractérisé en ce que le mélange de matériau carboné, de gypse et de matériau pyritique ou son équivalent en termes de Fe et de S est aggloméré pour former des pellets avant d'être chargé sur ladite grille mécanique.

12. Procédé selon l'une quelconque des revendications 1 à 11 caractérisé en ce que ledit matériau solide est déchargé de la grille et recyclé par addition de matériau carboné et de gypse audit mélange.

FIG.1

FIG.2

12

FIGURE 3
SO$_2$ CONCENTRATION IN RAW GAS VERSUS SINTERING TIME

EXAMPLE 1
MATERIAL PROCESSED: 69 LBS.
BED DEPTH: 12"
PEAK SO$_2$: 7.6%

EXAMPLE 2
MATERIAL PROCESSED: 86 LBS.
BED DEPTH: 12"
PEAK SO$_2$: 16.2%

13